(19) Europäisches Patentamt
European Patent Office
Office européen des brevets

(11) **EP 3 335 016 B1**

(12) **EUROPÄISCHE PATENTSCHRIFT**

(45) Veröffentlichungstag und Bekanntmachung des Hinweises auf die Patenterteilung:
**27.05.2020 Patentblatt 2020/22**

(21) Anmeldenummer: **16741961.3**

(22) Anmeldetag: **26.07.2016**

(51) Int Cl.:
*G01F 1/58* (2006.01)      *G01F 15/02* (2006.01)
*G01F 25/00* (2006.01)

(86) Internationale Anmeldenummer:
**PCT/EP2016/067732**

(87) Internationale Veröffentlichungsnummer:
**WO 2017/025314 (16.02.2017 Gazette 2017/07)**

(54) **MAGNETISCH-INDUKTIVES DURCHFLUSSMESSGERÄT UND VERFAHREN ZUR KOMPENSATION EINES STRÖMUNGSBEDINGTEN MESSFEHLERS**

MAGNETIC INDUCTIVE FLOW METER AND METHOD TO COMPENSATE A FLOW-INDUCED MEASUREMENT ERROR

DÉBITMÈTRE MAGNÉTO-INDUCTIF ET PROCÉDÉ DE COMPENSATION D'UNE ERREUR DE MESURE INDUITE PAR UN DÉBIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2015 DE 102015113390**

(43) Veröffentlichungstag der Anmeldung:
**20.06.2018 Patentblatt 2018/25**

(73) Patentinhaber: **Endress+Hauser Flowtec AG**
**4153 Reinach (CH)**

(72) Erfinder: **BUDMIGER, Thomas**
**30655 Hannover (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A1- 0 878 694      DE-A1- 2 743 954
DE-A1- 3 700 165      GB-A- 2 292 613
US-A- 4 008 609       US-A- 4 015 471

**Beschreibung**

Die vorliegende Erfindung betrifft ein magnetisch-induktives Durchflussmessgerät und ein Verfahren zur Kompensation eines strömungsprofilbedingten Messfehlers bei der Durchflussmessung.

Bei der Durchflussmessung können Strömungsstörungen auftreten. Diese können teilweise nicht verhindert werden, da beispielsweise einige Strömungsstörungen auf konstruktive Gegebenheiten einer Rohrleitung zurückzuführen sind. Üblicherweise z.B. wird empfohlen ein Durchflussmessgerät in einer Rohrleitung erst in einem bestimmten Abstand von dem störungsverursachenden Bauteil, z.B. einem Rohrkrümmer oder einer Blende, zu konstruieren um sicherzugehen, dass kein zu großer Messfehler auftritt.

Da die Strömungsstörungen allerdings auch je nach Durchflussgeschwindigkeit unterschiedlich stark ausgeprägt sein können und sich die Störungen auch aufgrund eines Langzeitgebrauchs, z.B. Verkalkung des Krümmers, Ablagerungen an der Blende usw., ändern, können ist es für den Nutzer von Interesse festzustellen, ob im Bereich der Durchflussmessung ein vollausgeprägtes rotationssymmetrisches Strömungsprofil vorliegt oder nicht. Die Ermittlung einer solchen Information ist bislang ein ungelöstes Problem.

Die GB 2 292 613 A lehrt ein magnetisch-induktives Durchflussmessgerät mit mehr als zwei Messelektroden und einem durch Permanentmagnete erzeugten stationären Magnetfeld. Durch das Anbringen zusätzlicher Messelektroden und das Abgreifen der jeweiligen anliegenden Messspannungen können Störungen, wie Einflüsse durch Elektrodenimpedanzen oder Ablagerungen detektiert werden. Weicht eine gemessene Messspannung vom Mittelwert aller gemessenen Messspannungen ab, so wird dieser verworfen und ein Warnhinweis signalisiert, dass eine Wartung oder eine Korrekturmaßnahme fällig ist. Weitere Informationen bezüglich des Durchflussmessgerätes können anhand statistischer, spektraler und Zeitreihen-Analysen der gemessenen Potentiale ermittelt werden. Somit kann die Problematik des fehlenden Nullpunkt-Potentials bei magnetisch-induktiven Durchflussmessgeräten mit Permanentmagneten umgangen werden. Das offenbarte Kompensationsverfahren versagt jedoch darin, strömungsprofilbedingte Störungen zu erkennen und dessen Einflüsse auf den ermittelten Durchfluss und/oder Durchflussgeschwindigkeit zu kompensieren.

Die Aufgabe der vorliegenden Erfindung liegt darin, ein Verfahren zur Kompensation eines strömungsprofilbedingten Messfehlers bereitzustellen.

Die vorliegende Aufgabe wird durch ein Verfahren mit den Merkmalen des Anspruchs 1 und durch ein Durchflussmessgerät mit den Merkmalen des Anspruchs 2 gelöst.

Der konstruktive Aufbau des Durchflussmessgerätes erlaubt in Zusammenspiel mit der Auswerteeinheit gemäß einem nicht-erfindungsgemäßen Beispiel eine Erkennung ob ein vollausgebildetes rotationssymmetrisches Strömungsprofil zum Zeitpunkt der Durchflussmessung vorliegt oder nicht. Der Zeitpunkt der Durchflussmessung ist dabei nicht auf die konkrete Erfassung eines Potentials zu verstehen sondern auf ein kontinuierliches Ermitteln von Messwerte, bei deren Ermittlung zusätzlich auch die Erkennung des Strömungsprofils durchgeführt wird, um die Verlässlichkeit der ermittelten Durchflusswerte evaluieren zu können.

Vorteilhafte Ausgestaltungen der Erfindung sind Gegenstand der Unteransprüche.

Es ist von Vorteil, wenn die erste und die zweite der beiden Elektrodenachsen um ein Winkelmaß zwischen $\pi/8$ rad und $3\pi/8$ rad gegenüber einer Parallelprojektion der Messelektrodenachse auf der zweiten Querschnittsebene versetzt angeordnet ist. Der Versatz kann durch Projektion bei Drehung um den Schnittpunkt mit der Messrohrachse erreicht werden.

Die erste und die zweite Elektrodenachse können vorteilhaft um den gleichen Betrag in oder entgegen dem Uhrzeigersinn gegenüber einer Parallelprojektion der ersten Elektrodenachse versetzt angeordnet sein.

Das magnetisch induktive Durchflussmessgerät weist vorteilhaft zusätzlich zu den vier Elektroden auf der zweiten Querschnittsebene vier weitere Elektroden auf, von welchen je zwei Elektroden diametral zueinander am Messrohr angeordnet sind und eine vierte und eine fünfte Elektrodenachse ausbilden, welche einen Schnittpunkt mit der Messrohrachse aufweisen;
wobei beide Elektrodenachsen auf einer dritten Querschnittsebene liegen, wobei jede der beiden Elektrodenachsen die Messrohrachse schneidet und wobei die dritte Querschnittsebene senkrecht zur Messrohrachse steht,
wobei die erste der beiden Elektrodenachsen um ein Winkelmaß im Uhrzeigersinn von kleiner als oder gleich $\pi/2$ rad gegenüber einer Parallelprojektion der ersten Elektrodenachse auf der dritten Querschnittsebene versetzt angeordnet ist und wobei die zweite der beiden Elektrodenachsen um ein Winkelmaß entgegen dem Uhrzeigersinn von kleiner als oder gleich $\pi/2$ rad gegenüber einer Parallelprojektion der ersten Elektrodenachse auf der dritten Querschnittsebene versetzt angeordnet ist.

Diese Anordnung aus vier zusätzlichen Elektroden kann zur Plausibilitätsprüfung der Ergebnisse eingesetzt werden, welche durch die anderen vier Elektroden erzielt werden.

Die zweite und die dritte Querschnittsebenen sind vorteilhaft, nicht aber zwingend, in einem gleichen Abstand von der ersten Querschnittsebene in Strömungsrichtung davor und dahinter angeordnet sind. So können beide (oder weitere) zusätzliche Ebenen vor oder nach der ersten Querschnittsebene angeordnet sein und völlig asymmetrisch in Z-Richtung angeordnet sein.

**EP 3 335 016 B1**

Die Auswerteeinheit ist vorteilhaft ausgerüstet anhand von abgegriffenen Messwerten an den vier Elektroden der zweiten Querschnittsebene und vorzugsweise auch anhand von abgegriffenen Messwerten an den vier Elektroden der dritten Querschnittsebene eine Kompensation eines strömungsquerschnittsbedingten Messfehlers durchzuführen.

Dabei kann die Auswerteeinheit zur Kompensation des strömungsquerschnittsbedingten Messfehlers eine Gewichtung von Potentialdifferenzen der an den vier, vorzugsweise acht, weiteren Elektroden anhand eines Gewichtungsfaktors durchführen.

Die Auswerteeinheit kann vorteilhaft eine kompensierte Durchflussfunktion ermitteln und die Auswerteeinheit kann im Anschluss an diese Ermittlung Extrema dieser Durchflussfunktion z.B. durch Festlegung von Ober- und/oder Untergrenzen entfernen.

Es ist von Vorteil, wenn eine Ausgabe einer Fehlermeldung und/oder eine Information darüber ausgegeben wird, dass kein vollausgebildetes rotationssymmetrisches Strömungsprofil vorliegt, sofern eine der Potentialdifferenzen größer ist als der vorgegebene Sollwert.

Nachfolgend wird die Erfindung im Detail anhand der beigefügten Figuren näher beschrieben.

Es zeigen:

Fig. 1 eine Elektrodenverteilung am Innenumfang eines Messrohres eines erfindungsgemäßen Durchflussmessgerätes in einer Schnittansicht senkrecht zur Messrohrachse;

Fig. 2 die Elektrodenverteilung eines erfindungsgemäßen Durchflussmessgerätes in einer Schnittansicht parallel zur Messrohrachse;

Fig. 3 Potential-Differenzen bezogen Rotationswinkel der Strömung bei einer vollausgebildeten symmetrischen Strömung in x-, y- und z-Richtung im Messrohr in der Querschnittsebene Q1;

Fig. 4a Potential-Differenzen an einer ersten von zwei Elektrodenachsen bezogen Rotationswinkel der Strömung bei einer vollausgebildeten symmetrischen Strömung in x-, y- und z-Richtung im Messrohr in der Querschnittsebene Q2;

Fig. 4b Potential-Differenzen an einer ersten von zwei Elektrodenachsen bezogen Rotationswinkel der Strömung bei einer vollausgebildeten symmetrischen Strömung in x-, y- und z-Richtung im Messrohr in der Querschnittsebene Q3;

Fig. 5a Potential-Differenzen an einer zweiten von zwei Elektrodenachsen bezogen Rotationswinkel der Strömung bei einer vollausgebildeten symmetrischen Strömung in x-, y- und z-Richtung im Messrohr in der Querschnittsebene Q2;

Fig. 5b Potential-Differenzen an einer zweiten von zwei Elektrodenachsen bezogen Rotationswinkel der Strömung bei einer vollausgebildeten symmetrischen Strömung in x-, y- und z-Richtung im Messrohr in der Querschnittsebene Q3;

Fig. 6 Magnetfeldverteilung über die Messrohrbreite auf Höhe der Messelektroden;

Fig. 7 Magnetfeldverteilung bei Ausrichtung einer Elektrodenachse in z-Richtung aufgeteilt nach Strömungen in x-, y- und z-Richtung;

Fig. 8 Magnetfeldverteilung bei Ausrichtung einer Elektrodenachse in y-Richtung aufgeteilt nach Strömungen in x-, y- und z-Richtung;

Fig. 9 Magnetfeldverteilung bei Ausrichtung einer Elektrodenachse in x-Richtung aufgeteilt nach Strömungen in x-, y- und z-Richtung;

Fig. 10 Darstellung des prozentualen Messfehlers in Abhängigkeit von der Strömungsgeschwindigkeit;

Fig. 11 Darstellung einzelner Signalpfade welche bei der Signalverarbeitung zur Kompensation eines strömungsprofilabhängigen Messfehlers berücksichtigt werden können;

Fig. 12 Darstellung eines vollausgebildeten rotationssymmetrischen Strömungsprofils;

Fig. 13      Darstellung eines gestörten Strömungsprofils;

Fig. 14      Aufbau einer Anlage mit integriertem Durchflussmessgerät, wobei an dem Punkt 15 sich ein Strömungsprofil analog zu Fig. 13 ausbildet;

Fig. 15      Darstellung der Durchflussgeschwindigkeit einer rotierenden Strömung mit einem Strömungsprofil analog zu Fig. 13, mit unkorrigierten, korrigierten und ideelerwarteten Durchflussgeschwindigkeiten; und

Fig. 16      eine schematische Darstellung eines magnetisch-induktiven Durchflussmessgerätes aus dem Stand der Technik.

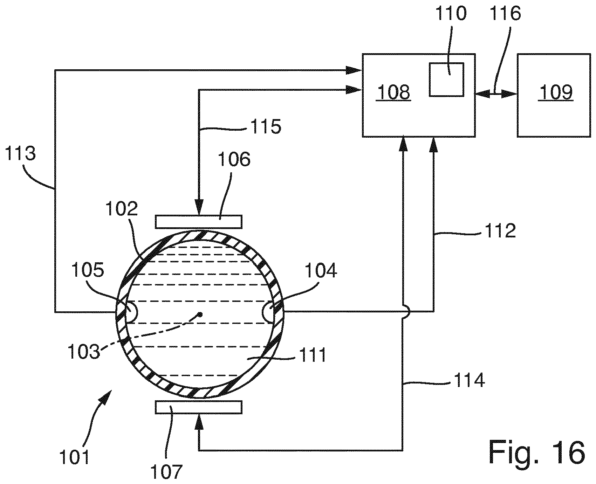

Fig. 16 zeigt eine schematische Darstellung eines an sich bekannten Durchflussmessgerätes 101, anhand welchem der grundlegende Aufbau eines magnetisch-induktiven Durchflussmessgerätes erörtert wird. Ein dem Durchflussmessgerät zugeordnetes Messrohr 102 mit einer Messrohrachse 103 wird von dem Medium 111 durchflossen. Das Medium 111 ist zumindest in geringem Umfang elektrisch leitfähig. Das Messrohr 102 selbst ist aus einem nicht-leitfähigen Material gefertigt, oder es ist zumindest an seiner Innenfläche mit einem nicht-leitfähigen Material ausgekleidet.

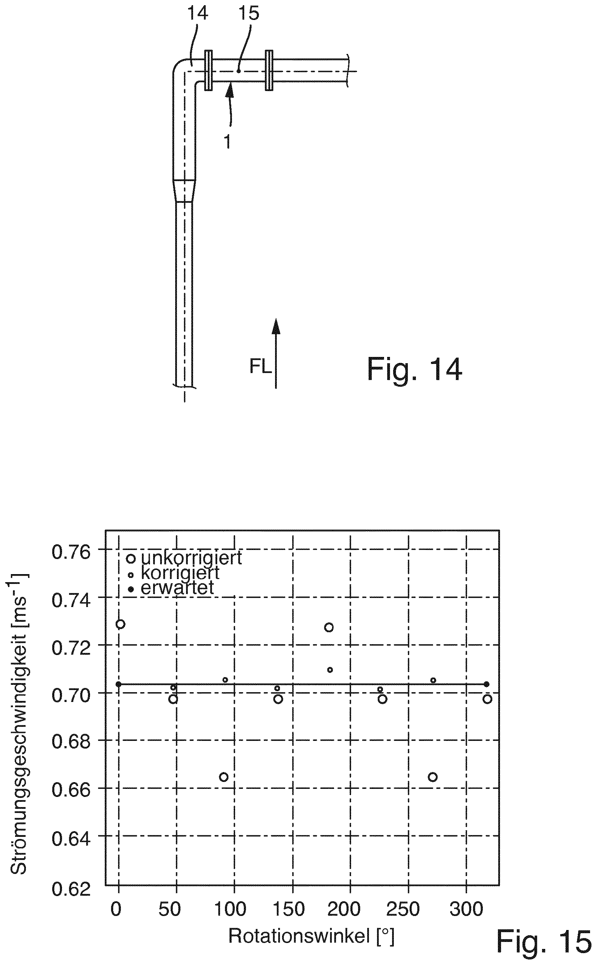

Ein senkrecht zur Messrohrachse 103 ausgerichtetes Magnetfeld MF wird über ein Magnetsystem erzeugt, welches üblicherweise über zwei diametral am Messrohr angeordnete Spulenanordnungen 106 und 107, z.B. durch Magnetspulen, erzeugt wird. Unter dem Einfluss des Magnetfeldes MF wandern in dem Medium 11 befindliche Ladungsträger je nach Polarität zu den beiden entgegengesetzt gepolten Messelektroden 104, 105 ab. Diese Messelektroden bilden eine Messelektrodenachse A aus, welche senkrecht zum Magnetfeld MF und senkrecht zur Messrohrachse 103 ausgerichtet ist. Die sich an den Messelektroden 104, 105 aufbauende Spannung ist proportional zu der über den Querschnitt des Messrohres 102 gemittelten Strömungsgeschwindigkeit des Messmediums 111, d. h. wird unter Annahme eines voll-ausgebildeten Strömungsprofils der Strömung des Messmediums 111 als Maß für den Volumenstrom des Mediums 111 in dem Messrohr 102 angesehen. Das Messrohr 102 kann zudem über Verbindungselemente, z. B. Flansche, die in der Zeichnung nicht gesondert dargestellt sind, mit einem Rohrsystem, durch welches das Medium 111 hindurchströmt, verbunden sein. Ein derart integriertes magnetisch-induktives Durchflussmessgerät mit entsprechenden Flanschverbindungen ist beispielsweise in Fig. 14 dargestellt.

Die Messelektroden 104, 105 befinden sich im gezeigten Beispiel in direktem Kontakt mit dem Medium bzw. Messmedium 111; die Kopplung kann jedoch, wie bereits an vorhergehender Stelle erwähnt, auch kapazitiver Natur sein.

Die Messelektroden 104, 105 können über Verbindungsleitungen 112, 113 sind die mit einer Auswerteeinheit 108 verbunden sein. Die Verbindung zwischen den Spulenanordnungen 106, 107 und der Auswerteeinheit 108 kann über die Verbindungsleitungen 114, 115 erfolgen. Die Auswerteeinheit 108 kann über die Verbindungsleitung 116 oder über einen Wireless-Signalpfad mit einer Eingabe-/Ausgabeeinheit 109 verbunden sein.

Die Auswerteeinheit 108 kann optional über eine Speichereinheit 110 und eine nicht-näher dargestellte Recheneinheit verfügen und kann die Spulensteuerung übernehmen. Die Auswerteeinheit beaufschlagt dabei die Spulenanordnung 106, 107 so mit Strom, dass das Magnetfeld MF periodisch seine Richtung ändert.

Das in Fig. 16 dargestellte übliche magnetisch-induktive Durchflussmessgerät misst hochgenau sofern das Strömungsprofil des durch das Messrohr strömenden Mediums rotationssymmetrisch und voll ausgebildet bzw. voll entwickelt ist. Jede Abweichung von diesem ideellen Strömungsprofil führt zu einer zusätzlichen Messabweichung. Es kann ermittelt werden, ob ein annähernd rotationssymmetrisches und voll ausbildetes Strömungsprofil vorliegt. Gemäß der Erfindung kann sodann eine Abweichung vom ideellen Strömungsprofil festgestellt und/oder diese Abweichung kompensiert werden.

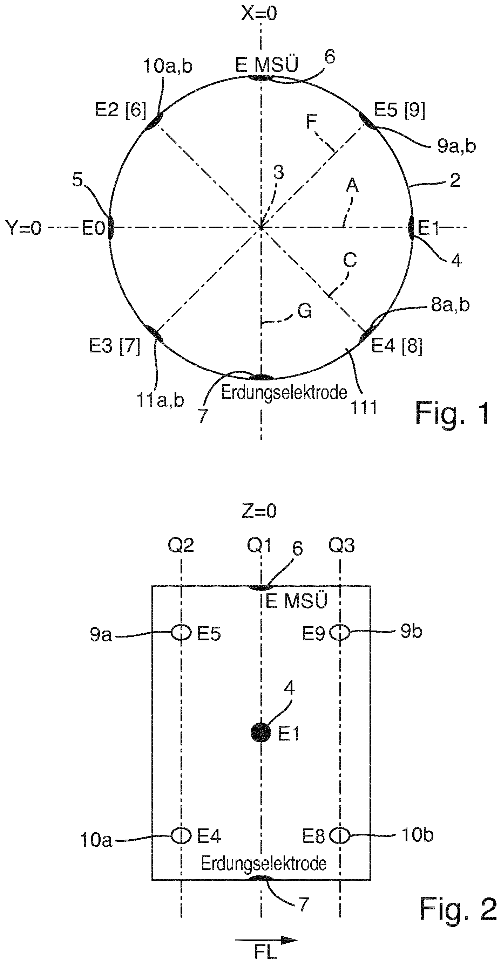

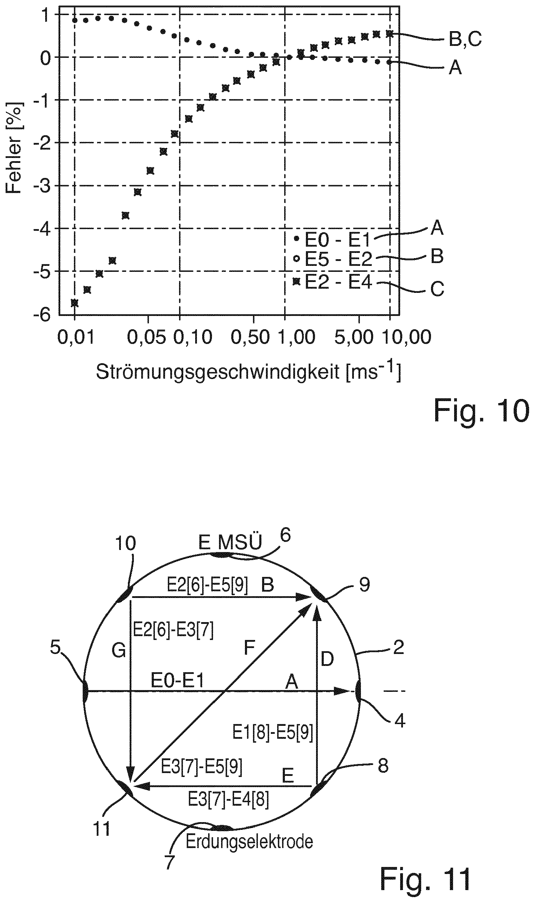

Fig. 1 und 2 zeigt einen vereinfachten Querschnitt eines erfindungsgemäßen magnetisch-induktiven Durchflussmessgeräts. Der grundlegende in Fig. 11 dargestellte Aufbau eines magnetisch-induktiven Durchflussmessgerätes wird beigehalten. Allerdings wird das in Fig. 1 und 2 dargestellte Messgerät um weitere Elektroden ergänzt, welche an und/oder in einem Messrohr 2 angeordnet sind.

Die Verwendung der beiden Elektroden 6 und 7 ist an sich bekannt. In der vorliegenden Erfindung werden sie lediglich optional eingesetzt. Es handelt sich dabei bei der Elektrode 6 um eine sogenannte MSÜ-Elektrode (Messstoffüberwachungselektrode) oder EPD-Elektrode (Empty pipe detection electrode), welche ermittelt, ob das Messrohr vollgefüllt oder nur teilgefüllt ist. Diese Elektrode 6 befindet sich bei waagerechter Einbausituation am höchsten Punkt des Lumens des Messrohres 2.

Weiterhin ist die Elektrode 7 vorgesehen, welche als sogenannte Erdungselektrode ausgebildet ist. Diese befindet sich bei waagerechter Einbaulage des Durchflussmessgerätes am untersten Punkt des Lumens des Messrohres. Die Elektroden 6 und 7 bilden somit eine Elektrodenachse G aus, die senkrecht zur Messelektrodenachse A der Messelektroden 4 und 5 steht. Die Messelektroden sowie die Elektroden 6 und 7 liegen vorzugsweise auf einer gemeinsamen ersten Querschnittsebene Q1 des Messrohres 2.

Darüber hinaus sind in der Ausführungsvariante der Fig. 1 und 2 insgesamt acht weitere Elektroden 8a, b bis 11a, b am Messrohr 2 angeordnet. Die vorliegende Erfindung kann allerdings beispielsweise auch mit lediglich vier Elektroden ausgeführt werden.

Jeweils vier Elektroden 8a bis 11a oder 8b bis 11b befinden sich dabei vorzugsweise auf einer zweiten oder dritten Querschnittsebene Q2 oder Q3 des Messrohres, also einer Schnittebene des Messrohres 2, welche senkrecht zur Messrohrachse 3 steht. Sofern zusätzlich zu den zwei Messelektroden 4 und 5 und den optionalen Elektroden 6 und 7 lediglich vier weitere Elektroden vorgesehen sind, so liegen diese Elektroden vorzugsweise gemeinsam auf einer Querschnittebene Q1. Allerdings sind auch weniger bevorzugte Konfigurationen im Rahmen der vorliegenden Erfindung möglich, bei welchen eine oder beide Elektroden 6 und 7 außerhalb der ersten Querschnittsebene Q1 liegen.

Sowohl im Fall, dass lediglich eine Querschnittsebene mit vier Elektroden vorgesehen ist, als auch im Fall, dass zwei Querschnittsebenen vorgesehen sind mit jeweils vier Elektroden, können die Elektroden 8a und 10a bzw. 9a und 11a, sowie 8b und 10b bzw. 9b und 11b, bevorzugt jeweils paarweise eine Elektrodenachse C(Q2), C(Q3), F(Q2) oder F(Q3) ausbilden, welche die Messrohrachse 3 senkrecht schneidet. Somit sind auf einer oder beiden Querschnittsebenen zumindest jeweils zwei Elektrodenachsen C und F ausgebildet. Selbstverständlich können auch noch weitere Elektroden und weitere Elektrodenachsen auf der zweiten und/oder dritten Querschnittsebene Q2 und/oder Q3 angeordnet sein.

Von den vorgenannten zumindest zwei Elektrodenachsen C und F ist eine Elektrodenachse bezogen auf die Parallelprojektion der Messelektrodenachse A auf die jeweilige Querschnittsebene Q2 oder Q3 um ein Winkelmaß in einem Bereich von $1/8\pi$ rad bis $3/8\pi$ rad gegenüber der Parallelprojektion der Messelektrodenachse A in Uhrzeigersinn verdreht. Die zweite der zwei Elektrodenachsen ist ebenfalls bevorzugt um ein Winkelmaß in einem analogen Bereich entgegen dem Uhrzeigersinn gegenüber der Parallelprojektion der Messelektrodenachse A verdreht. Weiterhin bevorzugt können die erste und die zweite der zumindest zwei Elektrodenachsen C und F senkrecht zueinander ausgerichtet sein.

In der besonders bevorzugten Ausführungsvariante der Fig. 1 sind die beiden Elektrodenachsen um ein Winkelmaß von $1/4\pi$ rad, also um 45 Grad, gegenüber der Parallelprojektion der Messelektrodenachse A verdreht. Dabei ist eine Elektrodenachse in und eine Elektrodenachse entgegen dem Uhrzeigersinn verdreht.

Bevorzugt ist die zweite Querschnittsebene Q1 auf der Messrohrachse 3 in Strömungsrichtung FL vor und die dritte Querschnittsebene Q2 hinter der ersten Querschnittsebene Q3 angeordnet. In der bevorzugten Ausführungsvariante der Fig. 2 weisen die zweite und die dritte Querschnittsebene Q1 und Q2 den gleichen Abstand zur ersten Querschnittsebene Q3 auf.

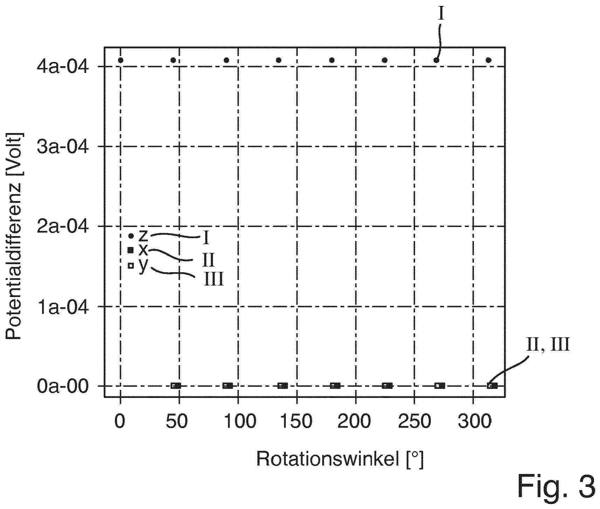

Die vorgenannte Elektrodenkonfiguration wird zur Untersuchung eines Strömungsprofil eingesetzt. Dies wird anhand der Fig. 3-10 nachfolgend näher erläutert.

Zur Charakterisierung von Strömungsprofile ist ein dreidimensionales Koordinatensystem anzuwenden, welches aus drei Richtungskomponenten x, y, und z besteht,, welche senkrecht zueinander stehen. Eine der Richtungskomponenten, die z-Richtungskomponente verläuft dabei parallel, vorzugsweise deckungsgleich, zur Messrohrachse 3.

Ein rotationssymmetrisches voll ausgebildetes Strömungsprofil sollte nur eine Richtungskomponente haben, nämlich die z-Komponente.

Das in Fig. 1 und 2 dargestellte Messgerät wurde anhand einer Simulation mittels eines entsprechenden Computermodells für das vorgenannte Messgerät untersucht. Das Modell des Messgerätes nach der Finite-Elemente Methode erstellt werden. Dabei wurden Strömungen simuliert, welche jeweils lediglich eine Strömungsrichtung in x-, y- oder z-Richtung aufweisen. Für alle Strömungsrichtung wurde eine analoge Strömungsgeschwindigkeit angenommen. Diese Strömungen können nur simuliert werden, da Strömungen mit ausschließlich x- oder y-Komponenten im Realfall nicht in einem Messrohr vorkommen.

Fig. 3 zeigt zunächst die Potentialdifferenz zwischen den Messelektroden 4 und 5 in Abhängigkeit vom Rotationswinkel, sofern eine Rotation der Strömung mit dem voll ausgebildeten rotationssymmetrischen Strömungsprofils simuliert wird. Die Strömung welche ausschließlich eine z-Komponente aufweist, bewirkt eine Spannungsdifferenz durch die gegebenen Strömungsgeschwindigkeit. Es ergibt sich keine Abhängigkeit der abgegriffenen Spannung vom Rotationswinkel. Die Strömungen mit ausschließlich x- und y-Komponenten erzeugen keine Spannung an den Messelektroden. Daher sind die Potentialdifferenzen, dieser beiden Strömungen Null.

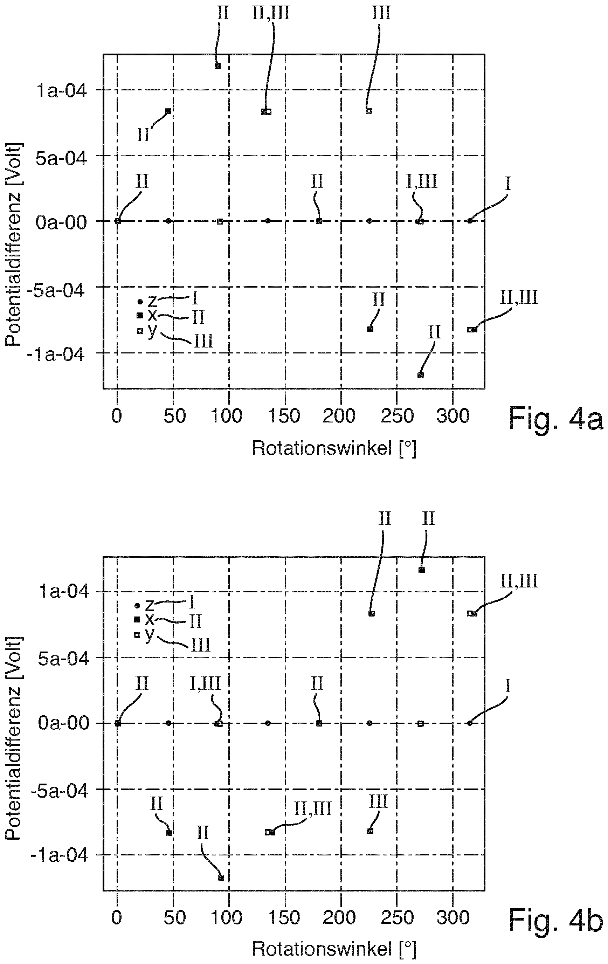

Fig. 4a zeigt eine Potentialdifferenz zwischen der Elektrode 10a und 11a welche in Strömungsrichtung vor der ersten der zwei Messelektroden 4 und um einen Winkel von $\pm$ 45 Grad entlang des Rohrumfangs versetzt zu dieser angeordnet sind.

Fig. 4b zeigt eine Potentialdifferenz zwischen der Elektrode 10b und 11b welche in Strömungsrichtung hinter der ersten der zwei Messelektroden 4 und um einen Winkel von $\pm$ 45 Grad entlang des Rohrumfangs versetzt zu dieser angeordnet sind.

Die Potentialdifferenz der ermittelten Strömung mit einer ausschließlichen z-Komponente ist Null. Die Strömungen mit ausschließlich x- oder y-Komponenten hingegen erzeugen eine Potentialdifferenz, welche vom Rotationswinkel der Strömung abhängt. Man erkennt zudem, dass die Strömung mit der x-Komponenten Null Volt bei 0° und bei 180° aufweist und dass die Strömung mit der y-Komponenten Null Volt bei 90° und 270° aufweist. Die Polarität der Potentialdifferenzen weist umgekehrte Vorzeichen für die Potentialdifferenzen der Fig. 4a und 4b auf.

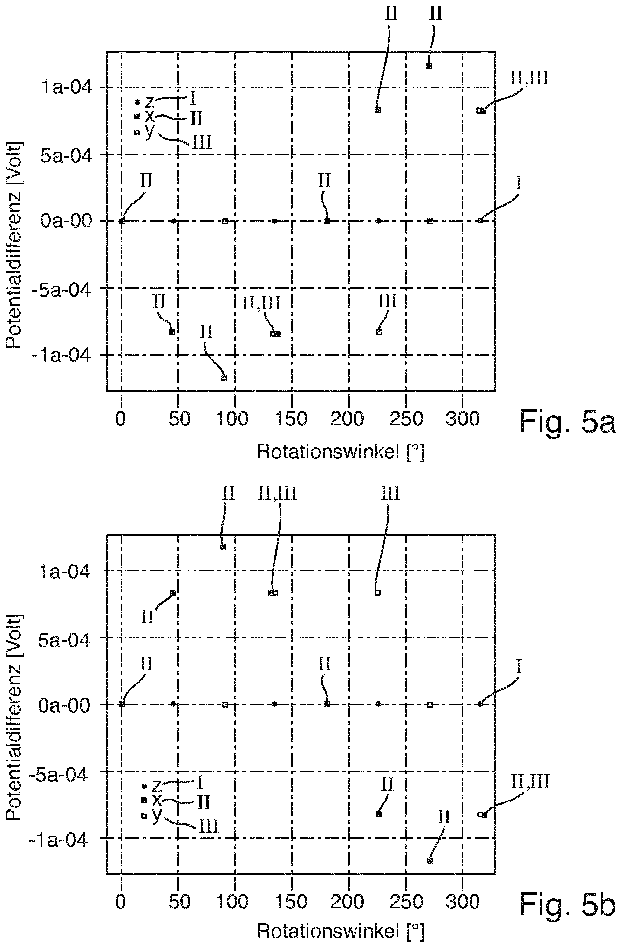

Fig. 5a zeigt eine Potentialdifferenz zwischen der Elektrode 8a und 9a welche in Strömungsrichtung vor der zweiten der zwei Messelektroden 5 und um einen Winkel von ± 45 Grad entlang des Rohrumfangs versetzt zu dieser angeordnet sind.

Fig. 5b zeigt eine Potentialdifferenz zwischen der Elektrode 8b und 9b welche in Strömungsrichtung hinter der zweiten der zwei Messelektroden 5 und um einen Winkel von ± 45 Grad entlang des Rohrumfangs versetzt zu dieser angeordnet sind.

Die ermittelten Potentialdifferenzen weisen den gleichen Betrag auf, wie die in Fig. 4a und 4b dargestellten Ergebnisse, allerdings mit umgekehrten Vorzeichen.

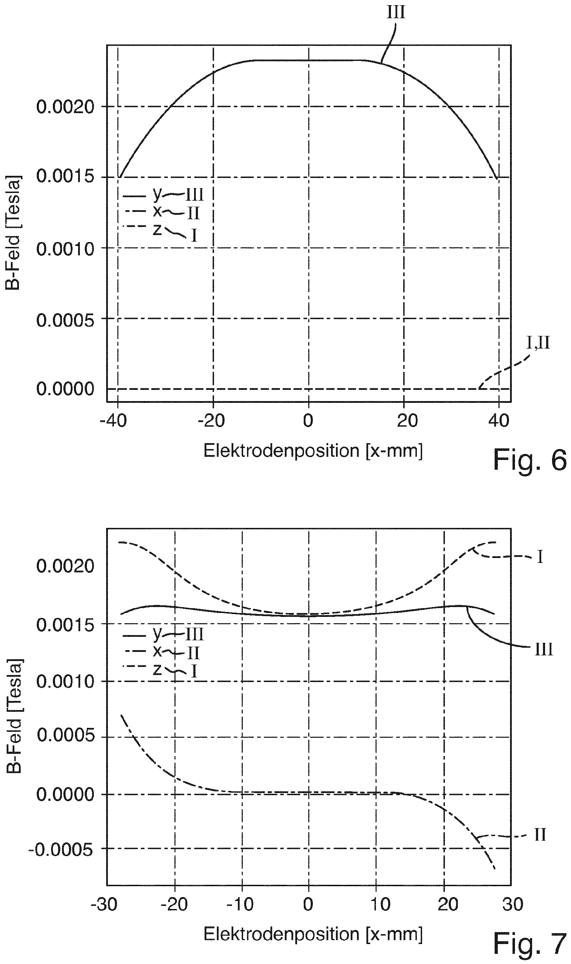

Fig. 6 zeigt eine typische Magnetfeldverteilung über die Breite des Messrohres. Die Magnetverteilung kann variieren. So ist es beispielsweise bekannt, dass Magnetfeld über einen Polschuh über den Querschnitt zu verteilen. Daher spielt auch die Form des Polschuhs eine Rolle, ebenfalls können auf einem Polschuh mehrere Spulen umfangsverteilt angeordnet sein, so dass also pro Spulenanordnung mehrere Spulen vorgesehen sein können. Auch sogenannte Sattelspulen können von Fig. 6 verschiedene Magnetfeldverteilung aufweisen. Die Magnetfeldverteilung kann für das jeweils installierte Spulensystem daher bei einem reellen Durchflussmessgerät auf der Speichereinheit der entsprechenden Auswerteeinheit hinterlegt sein und in die Berechnung mit einbezogen werden. Die in Fig. 6 dargestellte Magnetfeldverteilung entspricht somit den ermittelten Werten an den Messelektroden und gibt ausschließlich die MF-Werte für die Z-Komponente wieder, da die x- und y- Komponenten der rotationssymmetrischen voll-ausgebildeten Strömung kein Signal zwischen dem Messelektroden 4 und 5 generieren.

Allerdings ergeben sich für die Magnetfeldverteilung entlang der des Signalpfads 10a - 9a bei Simulation von Strömungen mit jeweils ausschließlich x-, y- und z-Komponenten die in Fig. 7 dargestellten Verläufe.

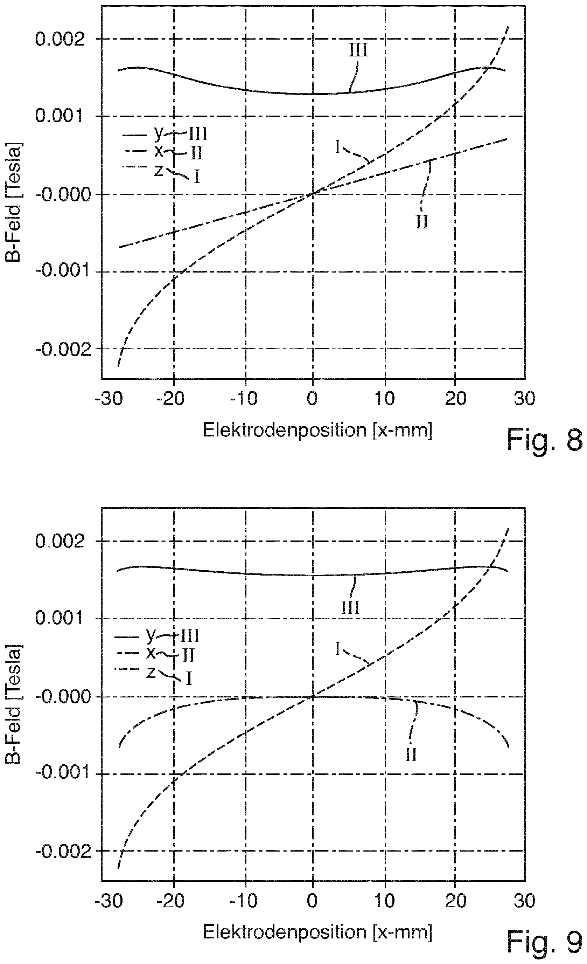

Fig. 8 gibt dazu die Magnetverteilung entlang des Signalpfads 10a - 11a.

Fig. 9 gibt die Magnetfeldverteilung entlang des Signalpfades 11a - 9a wieder.

Die Magnetfeldverteilungen können sodann für die Strömungskorrektur unter realen Bedingungen auf der Speichereinheit der Auswerteeinheit eines entsprechenden erfindungsgemäßen Durchflussmessgerätes hinterlegt werden.

Die Linearitäten eines Sensors können z.B. anhand eines Schlichting Strömungsgeschwindigkeitsprofils dargestellt werden. Fig. 10 zeigt in einem Schlichting Profil die Linearitäten des Signalpfads IV der Messelektrodenachse 4 - 5, sowie die Linearitäten der Signalpfade V und VI, welche übereinandergelagert sind, der weiteren beiden Elektrodenachsen 9a - 10a und 10a - 8a.

Diese Linearitäten können ebenfalls auf der Speichereinheit der Auswerteeinheit hinterlegt werden.

Die Ermittlung des Durchflusses und/oder der Durchflussgeschwindigkeit erfolgt durch den Signalabgriff an den Messelektroden 4 und 5, welche auf die Sensitivität des Sensors skaliert wird. Die Sensitivität kann auf der Speichereinheit der Auswerteeinheit hinterlegt werden. Die an den Messelektroden abgegriffene Spannung ist proportional zur Durchflussgeschwindigkeit in z-Richtung. Diese Durchflussgeschwindigkeit entspricht der tatsächlichen Durchflussgeschwindigkeit bei einem rotationssymmetrischen vollausgebildeten Strömungsprofil.

Nach den Vorbetrachtungen und Simulationen soll nunmehr nachfolgend der Messbetrieb eines in Betrieb befindlichen realen Durchflussmessgerätes und insbesondere dessen Signalverarbeitung durch die Auswerteeinheit näher erläutert werden.

Zur Veranschaulichung wird auf Fig. 11 und Fig. 2 verwiesen. Die Bezugszeichen A, C und F stellen dabei Signalpfade entlang von Elektrodenachsen dar, welche die Messrohrachse 3 schneiden, während die B, D, E und G stellen Signalpfade dar, welche nicht durch Elektrodenachsen verlaufen, die die Messrohrachse 3 schneiden. Bezugszeichen A ist dabei der Signalpfad entlang der Messelektrodenachse.

Folgende Definitionen für die Potentiale getroffen, welche an den Elektroden der Fig. 11 abgegriffen werden:

Elektrode 4 = $E_0$
Elektrode 5 = $E_1$
Elektrode 6 = $E_{EPD}$ (Leerrohrdetektion bzw. "empty pipe detection")
Elektrode 7 = $E_{GND}$ (Erdung bzw. "grounding")
Elektrode 8a = $E_4$
Elektrode 8b = $E_8$
Elektrode 9a = $E_5$
Elektrode 9b = $E_9$
Elektrode 10a = $E_2$
Elektrode 10b = $E_6$
Elektrode 11a = $E_3$
Elektrode 11b = $E_7$

Zunächst erfolgt eine Ermittlung der Potentialdifferenz $(E_2-E_3)$ und $(E_4-E_5)$ zwischen den Signalpfaden B und C auf der zweiten Querschnittsebene Q2. Ergeben beide Potentialdifferenzen einen Wert von Null, so liegt ein vollausgebildetes rotationssymmetrisches Profil vor und die aus der gemessenen Potentialdifferenz $(E_0-E_1)$ ermittelte Durchflussgeschwindigkeit entspricht der tatsächlichen Durchflussgeschwindigkeit.

Das Ergebnis der Differenzbildung muss nicht zwingend Null sein, sondern es kann ein Sollwert SW festgelegt werden, welcher beispielsweise unweit von Null entfernt ist, jedoch geringfügige Messabweichungen berücksichtigt.

Wie bereits in der Beschreibung des konstruktiven Aufbaus des erfindungsgemäßen magnetisch-induktiven Durchflussmessgerätes in Fig. 1 und 2 beschrieben wurde, genügt eine zweite Querschnittsebene Q2 mit vier Elektroden. Allerdings kann das Durchflussmessgerät vorteilhaft um eine dritte Querschnittsebene Q3 mit nochmals vier vorzugsweise identisch-angeordneten Elektroden ergänzt werden. Dadurch können Messfehler, z.B. durch Belagsbildung auf den Elektroden oder dergleichen, kompensiert werden.

Sofern zusätzlich zu den üblichen in einem magnetisch-induktiven Durchflussmessgerät eingesetzten Elektroden bei Verwendung von acht weiteren Elektroden 8a,b - 11 a,b folgende Ungleichung erfüllt sind

$$Ip = (E_2-E_3+E_8-E_9)/2 \leq SW;$$

und

$$Ir = (E_4-E_5+E_6-E_7)/2 \leq SW$$

so kann der Nutzer von einem voll ausgebildeten rotationssymmetrischen Strömungsprofil ausgehen, welches der Durchflussmessung vorlag. Entsprechend gering ist der Messfehler der ermittelten Durchflusswerte und/oder Durchflussgeschwindigkeiten. Das Vorliegen eines rotationssymmetrischen vollausgebildeten Strömungsprofils kann sodann durch die Ausgabeeinheit dem Nutzer angezeigt werden.

Anhand der Differenzbildung kann zudem bereits eine Aussage erfolgen, wie weit das tatsächliche Strömungsprofil vom tatsächlichen idealen vollausgebildeten rotationssymmetrischen Strömungsprofil entfernt ist. Dieser Differenzwert kann ebenfalls durch die Ausgabeeinheit mit angezeigt werden.

In einer Weiterbildung des Verfahrens kann auch eine Kompensation des geänderten Strömungsprofils erfolgen.

Zur Kompensation des Messeffektes durch das Strömungsprofil müssen gewichtete Anteile der Potentialdifferenzen $(E_2-E_5)$, $(E_6-E_9)$, $(E_3-E_4)$ und $(E_7-E_8)$ mit einem empirischen Gewichtungsfaktor berechnet werden.

Dieser empirische Gewichtungsfaktor $w_{factor}$ bezieht erfindungsgemäß die Parameter $CALF_{nominal}$, $CALF_{tb}$ und $U_{nom}$ ein.

$CALF_{nominal}$ ist der Wert für die nominale Sensitivität des Durchflussmessgerätes geteilt durch die tatsächlich ermittelte Sensitivität durch die gemessene Potentialdifferenz $(E_0-E_1)$ an den Messelektroden 4 und 5 unter den für die nominale Sensitivität angegebenen Referenzbedingungen.

$CALF_{tb}$ ist der Wert für die nominale Sensitivität des Durchflussmessgerätes geteilt durch die tatsächlich ermittelte Sensitivität durch die gemessene Potentialdifferenz $(E_3-E_4)$ oder $(E_5-E_2)$ unter den für die nominale Sensitivität angegebenen Referenzbedingungen.

$U_{nom}$ ist die nominale Sensitivität des Durchflussmessgerätes bzw. des Sensors (angegeben seitens des Herstellers unter Referenzbedingungen).

Anhand des oben genannten Gewichtungsfaktors $W_{faktor}$ können nunmehr die Kompensationswerte unter Einbeziehung von $CALF_{tb}$ ermittelt werden.

$$
\begin{aligned}
U_{std} &= E_0 - E_1 \\
U_{top\ in} &= E_2 - E_5 \\
U_{top\ out} &= E_6 - E_9 \\
U_{bottom\ in} &= E_3 - E_4 \\
U_{bottom\ out} &= E_7 - E_8
\end{aligned}
$$

$$(4)$$

$$cval_{top} = U_{std} - CALF_{tb} \times \frac{w_{factor} \times U_{top\ in} + U_{top\ out}}{1 + w_{factor}}$$

$$(5)$$

$$cval_{bottom} = U_{std} - CALF_{tb} \times \frac{w_{factor} \times U_{bottom\ in} + U_{bottom\ out}}{1 + w_{factor}}$$

$cval_{top}$ ist der gewichtete Anteil des oberen Messsignals; $cval_{bottom}$ ist der gewichtete Anteil des unteren Messsignals (siehe Fig. 11).

(6)

Zur vollständigen Erfassung der Strömungsverteilung, werden die Einlaufwerte und die Auslaufwerte der Messsignale, also abgegriffene Messsignale an Elektrodenachsen die vor oder hinter $E_0$-$E_1$ liegen, die auf der zweiten und/oder dritten Querschnittsebenen Q2 und/oder Q3 und parallel zu der Senkrechten der Messelektrodenachse A verlaufen, welche auf der ersten Querschnittsebene Q1 liegt. Wenn der errechnete Wert hoch ist bzw. einen oberen Sollwert SW2 überschreitet, so kann angenommen werden, dass die Strömungsverteilung keinen signifikanten Effekt hat und dessen Kompensation unberücksichtigt bleiben kann.

Aus den verschiedenen Potentialdifferenzen wird die Summe der Verhältnisse $c_{lim}$ zwischen den Paaren gemäß (7) ermittelt.

$$c_{lim} = \left| \frac{E_2 - E_3}{E_6 - E_7} + \frac{E_4 - E_5}{E_8 - E_9} \right|$$

$$(7)$$

Mit den Ergebnissen aus (4), (5), (6) und (7) wird ein kompensiertes Messresultat errechnet, wobei $C_{x\ 45,\ 90}$ und $C_{z\ 45,\ 90}$ Sensitivitäten für eine x- und z- Strömungskomponente bei einem vorgegebenen Winkel sind. Diese werden z.B. anhand eines in der Speichereinheit hinterlegten Sensormodells berechnet.

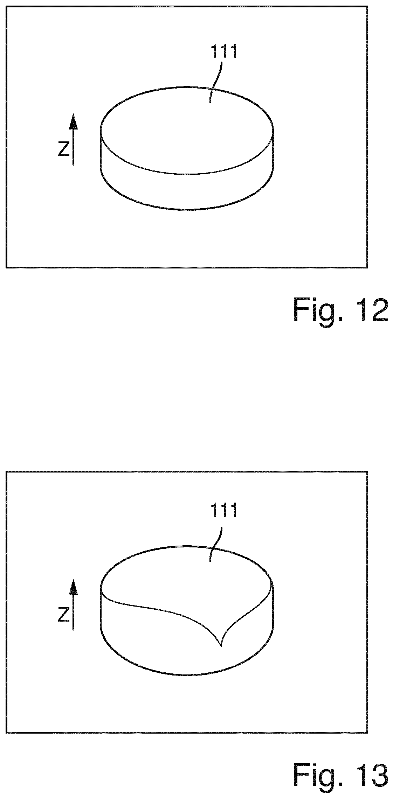

In Fig. 12 ist ein rotationssymmetrisches vollausgebildetes Strömungsprofil anschaulich dargestellt.

In Fig. 13 ist ein gestörtes Strömungsprofil dargestellt. Die Störung ist in einer Anlage aufgetreten bei welcher das erfindungsgemäße Durchflussmessgerät direkt in Anschluss an einen 90°-Krümmer 14 eingebaut wurde. Dabei stellt Fig. 14 das Strömungsprofil an der Stelle 15 dar, wie es auf Höhe der Messelektroden des magnetisch-induktiven Durchflussmessers 1 auftritt.

Fig. 15 zeigt den unkorrigierten Durchfluss, den erwarteten Durchfluss in Form einer Linie und den korrigierten Durchfluss an. Wie man anhand von Fig. 15 deutlich erkennen kann, unterliegen die korrigierten Durchflusswerten wesentlich geringeren Schwankungen. Insgesamt wurde aus den dargestellten Werten eine Verbesserung der Messabweichung vom tatsächlichen Durchfluss um den Faktor 7,92 ermittelt.

Der Versuch wurde zudem mit anderen strömungsstörenden Körpern und daraus resultierenden gestörten Strömungsprofilen durchgeführt. Es ergaben sich je nach Stärke der Strömungsstörung Verbesserungen bei Verwendung des erfindungsgemäßen Durchflussmessgerätes und der besonderen Ausgestaltung des erfindungsgemäßen angewandten Verfahrens um die Faktoren zwischen 1,9 bis annähernd 10.

**Bezugszeichen**

101    magnetisch-induktives Durchflussmessgerät
102    Messrohr
103    Messrohrachse
104    Messelektrode
105    Messelektrode
106    Spulenanordnung
107    Spulenanordnung
108    Auswerteeinheit
109    Ein- und/oder Ausgabeeinheit
110    Speichereinheit
111    Medium
112    Verbindungsleitung

| | | |
|---|---|---|
| 113 | Verbindungsleitung | |
| 114 | Verbindungsleitung | |
| 115 | Verbindungsleitung | |
| | | |
| 1 | magnetisch-induktives Durchflussmessgerät | |
| 2 | Messrohr | |
| 3 | Messrohrlängsachse | |
| 4 | Messelektrode | |
| 5 | Messelektrode | |
| 6 | MSÜ-Elektrode | |
| 7 | Erdungselektrode | |
| 8 a - 11 a | zusätzliche Elektroden auf der Querschnittsebene Q2 | |
| 8 b - 11 b | zusätzliche Elektroden auf der Querschnittsebene Q3 | |
| 14 90° | Krümmer | |
| 15 | Untersuchungspunkt | |
| | | |
| Q1 | erste Querschnittsebene | |
| Q2 | zweite Querschnittsebene | |
| Q3 | dritte Querschnittsebene | |
| FL | Strömungsgeschwindigkeit | |
| MF | Magnetfeld | |
| | | |
| x | Richtungskomponente einer Strömung | |
| y | Richtungskomponente einer Strömung | |
| z | Richtungskomponente einer Strömung | |
| | | |
| I | Strömung in z-Richtung | |
| II | Strömung in x-Richtung | |
| III | Strömung in y-Richtung | |
| | | |
| A | Messelektrodenachse bzw. Signalpfad entlang dieser Achse | |
| C | Elektrodenachse durch die Messrohrlängsachse | |
| F | Elektrodenachse durch die Messrohrlängsachse | |
| B | Elektrodenachse ohne Schnittpunkt mit der Messrohrlängsachse | |
| D | Elektrodenachse ohne Schnittpunkt mit der Messrohrlängsachse | |
| E | Elektrodenachse ohne Schnittpunkt mit der Messrohrlängsachse | |
| G | Elektrodenachse zwischen der Erdungselektrode und der MSÜ-Elektrode | |

## Patentansprüche

1. Verfahren zur Kompensation eines strömungsprofilbedingten Messfehlers bei einer Durchflussmessung mittels eines magnetisch-induktiven Durchflussmessgerätes (1) mit einem Messrohr (2), welches eine Messrohrachse (3) aufweist, und eine erste und eine zweite Messelektrode (4, 5), welche diametral zueinander am Messrohr (2) angeordnet sind und an welchen ein Signalabgriff zur Ermittlung eines unkompensierten Durchflusses und/oder einer Durchflussgeschwindigkeit erfolgt,

   wobei das Durchflussmessgerät (1) eine Spulenanordnung aufweist, die über eine Auswerteeinheit so mit Strom beaufschlagt ist, dass ein resultierendes Magnetfeld periodische seine Richtung ändert;

   wobei die erste und die zweite Messelektrode (4, 5) eine erste Elektrodenachse (A) definieren, welche einen Schnittpunkt mit der Messrohrachse (3) aufweist und wobei die erste Elektrodenachse (A) in einer ersten Querschnittsebene (Q1) verläuft, die senkrecht zur Messrohrachse (3) verläuft;

   wobei das Durchflussmessgerät (1) eine erste, zweite, dritte und vierte Elektrode (8a - 11a) aufweist;

   wobei die erste und zweite Elektrode (8a, 10a) diametral zueinander am Messrohr (2) angeordnet sind und eine zweite Elektrodenachse (C) ausbilden;

   wobei und die dritte und vierte Elektrode (9a, 11a) diametral zueinander am Messrohr (2) angeordnet sind und eine dritte Elektrodenachse (F) ausbilden;

   wobei die zweite und die dritte Elektrodenachse (C, F) einen Schnittpunkt mit der Messrohrachse (3) aufweisen;

   wobei die zweite und die dritte Elektrodenachse (C, F) auf einer zweiten Querschnittsebene (Q2) liegen;

wobei sowohl die zweite als auch die dritte Elektrodenachse (C oder F) die Messrohrachse (3) schneiden;
wobei die zweite Querschnittsebene (Q2) senkrecht zur Messrohrachse (3) steht,
wobei die zweite Elektrodenachse (C) um ein Winkelmaß im Uhrzeigersinn von kleiner als oder gleich $\pi/2$ rad gegenüber einer Parallelprojektion der ersten Elektrodenachse (A) auf der zweiten Querschnittsebene (Q2) versetzt angeordnet ist;
wobei die dritte Elektrodenachse (F) um ein Winkelmaß entgegen dem Uhrzeigersinn von kleiner als oder gleich $\pi/2$ rad gegenüber einer Parallelprojektion der ersten Elektrodenachse (A) auf der zweiten Querschnittsebene (Q2) versetzt angeordnet ist, umfassend die folgenden Schritte:

A Abgreifen von Potentialen an den vier Elektroden (8a-11a), wobei $E2$ ein Potential an der zweiten Elektrode, $E3$ ein Potential an der vierten Elektrode, $E4$ ein Potential an der ersten Elektrode und $E5$ ein Potential an der dritten Elektrode ist;
B Ermittlung mehrerer Potentialdifferenzen jeweils zwischen den Potentialen zweier, bezogen auf den Umfang des Messrohres, benachbarter Elektroden;
C Gewichtung dieser Potentialdifferenzen aus Schritt B und einer Potentialdifferenz zwischen den Potentialen $E0$ und $E1$ an den Messelektroden (4,5) mit einem empirischen Gewichtungsfaktor, unter Einbeziehung von $CALF_{nominal}$, $CALF_{tb}$ und $U_{nom}$,
wobei $U_{nom}$ durch eine nominale Sensitivität des Durchflussmessgerätes oder des Sensors, angegeben seitens des Herstellers unter Referenzbedingungen definiert ist,
wobei $CALF_{nominal}$ durch die nominale Sensitivität des Durchflussmessgerätes geteilt durch die tatsächlich ermittelte Sensitivität durch die gemessene Potentialdifferenz ($E0 - E1$) an der ersten und zweiten Messelektrode (4, 5) unter den für die nominale Sensitivität angegebenen Referenzbedingungen definiert ist,
wobei $CALF_{tb}$ durch die nominale Sensitivität des magnetisch-induktiven Durchflussmessgerätes geteilt durch eine tatsächliche ermittelte Sensitivität durch die gemessene Potentialdifferenz ($E3 - E4$) oder ($E5 - E2$) unter den für die nominale Sensitivität angegebenen Referenzbedingungen definiert ist;
D Ermittlung eines oder mehrerer Kalibrationsfaktoren aus den
gewichteten Potentialdifferenzen; und
E Kompensation des unkompensierten Durchflusses und/oder der
unkompensierten Durchflussgeschwindigkeit anhand des einen oder
der mehreren Kalibrationsfaktoren.

2. Magnetisch-induktives Durchflussmessgerät (1) mit einem Messrohr (2), welches eine Messrohrachse (3) aufweist, und eine erste und eine zweite Messelektrode (4, 5), welche diametral zueinander am Messrohr (2) angeordnet sind, und an welchen ein Signalabgriff zur Ermittlung eines Durchflusses und/oder einer Durchflussgeschwindigkeit erfolgt;
wobei die erste und die zweite Messelektrode (4, 5) eine erste Elektrodenachse (A) definieren, welche einen Schnittpunkt mit der Messrohrachse (3) aufweist und wobei die erste Elektrodenachse (A) in einer ersten Querschnittsebene (Q1) verläuft, die senkrecht zur Messrohrachse (3) angeordnet ist;
wobei das Durchflussmessgerät (1) eine erste, zweite, dritte und vierte Elektrode (8a - 11a) aufweist;
wobei die erste und zweite Elektrode (8a, 10a) diametral zueinander am Messrohr (2) angeordnet sind und eine zweite Elektrodenachse (C, F) definieren;
wobei die dritte und vierte Elektrode (9a, 11a) diametral zueinander am Messrohr (2) angeordnet sind und eine dritte Elektrodenachse (F) definieren;
wobei die zweite und dritte Elektrodenachse (C, F) auf einer zweiten Querschnittsebene (Q2) liegen;
wobei die zweite und die dritte Elektrodenachse (C oder F) jeweils die Messrohrachse (3) schneiden und wobei die zweite Querschnittsebene (Q2) senkrecht zur Messrohrachse (3) steht;
wobei die zweite Elektrodenachse (C) um ein Winkelmaß im Uhrzeigersinn von kleiner als oder gleich $\pi/2$ rad gegenüber einer Parallelprojektion der ersten Elektrodenachse (A) auf der zweiten Querschnittsebene (Q2) versetzt angeordnet ist;
wobei die dritte Elektrodenachse (F) um ein Winkelmaß entgegen dem Uhrzeigersinn von kleiner als oder gleich $\pi/2$ rad gegenüber einer Parallelprojektion der ersten Elektrodenachse (A) auf der zweiten Querschnittsebene (Q2) versetzt angeordnet ist; und **dadurch gekennzeichnet, dass** das Durchflussmessgerät (1) eine Spulenanordnung aufweist, die über eine Auswerteeinheit so mit Strom beaufschlagt ist, dass ein resultierendes Magnetfeld periodisch seine Richtung ändert, wobei die Auswerteeinheit dazu ausbildet ist, ein Verfahren nach Anspruch 1 auszuführen.

3. Magnetisch-induktives Durchflussmessgerät nach Anspruch 2, **dadurch gekennzeichnet, dass** die zweite und dritte Elektrodenachse (C, F) um ein Winkelmaß zwischen $\pi/8$ rad und $3\pi/8$ rad gegenüber einer Parallelprojektion der ersten Elektrodenachse (A) auf der zweiten Querschnittsebene versetzt angeordnet sind.

**4.** Magnetisch-induktives Durchflussmessgerät nach Anspruch 2 oder 3, **dadurch gekennzeichnet, dass** die zweite und dritte Elektrodenachse (C, F) um den gleichen Betrag in oder entgegen dem Uhrzeigersinn gegenüber einer Parallelprojektion der ersten Elektrodenachse (A) versetzt angeordnet sind.

**5.** Magnetisch-induktives Durchflussmessgerät nach einem der vorhergehenden Ansprüche, **dadurch gekennzeichnet, dass** die zweite und die dritte Querschnittsebene (Q2 und Q3) in einem gleichen Abstand von der ersten Querschnittsebene (Q1) in Strömungsrichtung (FL) davor und dahinter angeordnet sind.

**6.** Magnetisch-induktives Durchflussmessgerät nach einem der vorhergehenden Ansprüche, **dadurch gekennzeichnet, dass** das magnetisch induktive Durchflussmessgerät zusätzlich zu den vier Elektroden (8a-11a) auf der zweiten Querschnittsebene (Q2) vier weitere Elektroden (8b - 11b) aufweist, von welchen je zwei Elektroden (8b, 10b oder 9b, 11b) diametral zueinander am Messrohr (2) angeordnet sind und eine vierte und eine fünfte Elektrodenachse ausbilden,

wobei die vierte und fünfte Elektrodenachse auf einer dritten Querschnittsebene (Q3) liegen,

wobei die vierte und fünfte Elektrodenachse die Messrohrachse (3) schneidet und wobei die dritte Querschnittsebene (Q3) senkrecht zur Messrohrachse (3) steht,

wobei die vierte Elektrodenachse um ein Winkelmaß im Uhrzeigersinn von kleiner als oder gleich $\pi/2$ rad gegenüber einer Parallelprojektion der ersten Elektrodenachse (A) auf der dritten Querschnittsebene (Q3) versetzt angeordnet ist,

wobei die fünfte Elektrodenachse um ein Winkelmaß entgegen dem Uhrzeigersinn von kleiner als oder gleich $\pi/2$ rad gegenüber einer Parallelprojektion der ersten Elektrodenachse (A) auf der dritten Querschnittsebene (Q3) versetzt angeordnet ist.

**7.** Magnetisch-induktives Durchflussmessgerät nach einem der Ansprüche 2 bis 6, **dadurch gekennzeichnet, dass** die Auswerteeinheit zur Kompensation des strömungsprofilbedingten Messfehlers eine Gewichtung von Potentialdifferenzen der an den vier oder acht weiteren Elektroden (8a,b - 11a,b) anhand eines Gewichtungsfaktors durchführt.

**8.** Magnetisch-induktives Durchflussmessgerät nach einem der Ansprüche 2 bis 7, **dadurch gekennzeichnet, dass** die Auswerteeinheit eine kompensierte Durchflussfunktion ermittelt und dass die Auswerteeinheit Extrema dieser Durchflussfunktion entfernt.

**Claims**

**1.** Procedure to compensate for a measuring error caused by a flow profile during flow measurement using an electromagnetic flowmeter (1) with a measuring tube (2), said tube having a measuring tube axis (3), and a first and a second measuring electrode (4, 5), wherein said measuring electrodes are arranged diametrically opposed to one another on the measuring tube (2) and wherein at said measuring electrodes a signal is measured to determine an uncompensated flow and/or a flow velocity,

wherein the flowmeter (1) has a coil arrangement, which is supplied with a current via an evaluation unit in such a way that a resulting magnetic field periodically changes its direction;

wherein the first and the second measuring electrode (4, 5) define a first electrode axis (A), which has a point of intersection with the measuring tube axis (3) and wherein the first electrode axis (A) extends over a first cross-sectional plane (Q1), which is perpendicular to the measuring tube axis (3);

wherein the flowmeter (1) has a first, a second, a third and a fourth electrode (8a - 11a) ;

wherein the first and second electrode (8a, 10a) are arranged in a diametrically opposite manner on the measuring tube (2) and form a second electrode axis (C);

wherein the third and fourth electrode (9a, 11a) are arranged in a diametrically opposite manner on the measuring tube (2) and form a third electrode axis (F);

wherein the second and third electrode axis (C, F) have a point of intersection with the measuring tube axis (3);

wherein the second and third electrode axis (C, F) are located on a second cross-sectional plane (Q2);

wherein both the second and the third electrode axis (C or F) cut the measuring tube axis (3);

wherein the second cross-sectional plane (Q2) is perpendicular to the measuring tube axis (3),

wherein the second electrode axis (C) is arranged on the second cross-sectional plane (Q2) offset by an angular dimension in the clockwise direction of less than or equal to $\pi/2$ rad in relation to a parallel projection of the first electrode axis (A),

wherein the third electrode axis (F) is arranged on the second cross-sectional plane (Q2) offset by an angular dimension in the counter-clockwise direction of less than or equal to $\pi/2$ rad in relation to a parallel projection of the first electrode axis (A),
said procedure comprising the following steps:

A Tapping of potentials at the four electrodes (8a-11a), wherein $E2$ represents a potential at the second electrode, $E3$ represents a potential at the fourth electrode, $E4$ represents a potential at the first electrode and $E5$ represents a potential at the third electrode;

B Determination of multiple potential differences between the potentials of two adjacent electrodes in relation to the circumference of the measuring tube;

C Weighting of the potential differences from step B and of a potential difference between the potentials $E0$ and $E1$ at the measuring electrodes (4, 5) with a empirical weighting factor, taking into consideration $CALF_{nominal}$, $CALF_{tb}$ and $U_{nom}$, wherein $U_{nom}$ is defined by a nominal sensitivity of the flowmeter or of the sensor, specified by the manufacturer under reference conditions,

wherein $CALF_{nominal}$ is defined by the nominal sensitivity of the flowmeter divided by the actual sensitivity determined by the measured potential difference ($E0 - E1$) at the first and the second measuring electrode (4, 5) under the reference conditions specified for the nominal sensitivity,

wherein $CALF_{tb}$ is defined by the nominal sensitivity of the electromagnetic flowmeter divided by the actual sensitivity determined by the measured potential difference ($E3 - E4$) or ($E5 - E2$) under the reference conditions specified for the nominal sensitivity;

D Determination of one or more calibration factors from the weighted potential differences; and

E Compensation of the uncompensated flow and/or of the uncompensated flow velocity using one of more calibration factors.

2. Electromagnetic flowmeter (1) with a measuring tube (2), said tube having a measuring tube axis (3), and a first and a second measuring electrode (4, 5), which are arranged diametrically opposite one another on the measuring tube (2) and at which a signal is tapped to determine a flow and/or a flow velocity; wherein the first and the second measuring electrode (4, 5) define a first electrode axis (A), which has a point of intersection with the measuring tube axis (3) and wherein the first electrode axis (A) extends in a first cross-sectional plane (Q1), which is arranged perpendicular to the measuring tube axis (3);
wherein the flowmeter (1) has a first, a second, a third and a fourth electrode (8a - 11a);
wherein the first and second electrode (8a, 10a) are arranged diametrically opposite one another on the measuring tube (2) and define a second electrode axis (C, F);
wherein the third and fourth electrode (9a, 11a) are arranged diametrically opposite one another on the measuring tube (2) and define a third electrode axis (F);
wherein the second and third electrode axis (C, F) are located on a second cross-sectional plane (Q2);
wherein the second and third electrode axis (C or F) each cut the measuring tube axis (3) and wherein the second cross-sectional plane (Q2) is perpendicular to the measuring tube axis (3),
wherein the second electrode axis (C) is arranged on the second cross-sectional plane (Q2) offset by an angular dimension in the clockwise direction of less than or equal to $\pi/2$ rad in relation to a parallel projection of the first electrode axis (A), wherein the third electrode axis (F) is arranged on the second cross-sectional plane (Q2) offset by an angular dimension in the counter-clockwise direction of less than or equal to $\pi/2$ rad in relation to a parallel projection of the first electrode axis (A); and
**characterized in that**
the flowmeter (1) has a coil arrangement, which is supplied with current via an evaluation unit in such a way that a resulting magnetic field periodically changes its direction, wherein the evaluation unit is designed to carry out a procedure as claimed in Claim 1.

3. Electromagnetic flowmeter as claimed in Claim 2, **characterized in that** the second and the third electrode axis (C, F) are arranged on the second cross-sectional plane offset by an angular dimension between $\pi/8$ rad and $3\pi/8$ rad in relation to a parallel projection of the first electrode axis (A).

4. Electromagnetic flowmeter as claimed in Claim 2 or 3, **characterized in that** the second and the third electrode axis (C, F) are arranged in a manner that they are offset by the same value in the clockwise or counter-clockwise direction in relation to a parallel projection of the first electrode axis (A).

5. Electromagnetic flowmeter as claimed in one of the previous Claims, **characterized in that** the second and the third cross-sectional plane (Q2 and Q3) are arranged at an equal distance from the first cross-sectional plane (Q1) in the flow direction (FL), before or after said plane.

6. Electromagnetic flowmeter as claimed in one of the previous Claims, **characterized in that** in addition to the four electrodes (8a - 11a) on the second cross-sectional plane (Q2), the electromagnetic flowmeter has four other electrodes (8b - 11b) of which two electrodes (8b, 10b or 9b, 11b) are arranged diametrically opposed to one another on the measuring tube (2) and form a fourth and a fifth electrode axis,
wherein the fourth and the fifth electrode axis are located on a third cross-sectional plane (Q3),
wherein the fourth and the fifth electrode axis cuts the measuring tube axis (3) and wherein the third cross-sectional plane (Q3) is perpendicular to the measuring tube axis (3),
wherein the fourth electrode axis is arranged on the third cross-sectional plane (Q3) offset by an angular dimension in the clockwise direction of less than or equal to $\pi/2$ rad in relation to a parallel projection of the first electrode axis (A),
wherein the fifth electrode axis is arranged on the third cross-sectional plane (Q3) offset by an angular dimension in the counter-clockwise direction of less than or equal to $\pi/2$ rad in relation to a parallel projection of the first electrode axis (A).

7. Electromagnetic flowmeter as claimed in one of the Claims 2 to 6, **characterized in that** the evaluation unit performs a weighting of potential differences on the four or eight other electrodes (8a,b - 11a,b) using a weighting factor for the purpose of compensating the measured error caused by the flow profile.

8. Electromagnetic flowmeter as claimed in one of the Claims 2 to 7, **characterized in that** the evaluation unit determines a compensated flow function and that the evaluation unit removes extremes of this flow function.

**Revendications**

1. Procédé destiné à la compensation d'un écart de mesure induit par le profil d'écoulement lors de la mesure de débit au moyen d'un débitmètre magnéto-inductif (1) avec un tube de mesure (2), lequel tube présente un axe de tube de mesure (3), et une première et une deuxième électrode (4, 5), lesquelles sont disposées de façon diamétralement opposée l'une à l'autre sur le tube de mesure (2) et sur lesquelles est effectué un prélèvement de signal en vue de la détermination d'un débit non compensé et/ou d'une vitesse d'écoulement,
le débitmètre (1) présentant un agencement de bobines, lequel agencement est alimenté en courant par le biais d'une unité d'exploitation, de telle sorte qu'un champ magnétique périodique en résultant modifie sa direction ;
la première et la deuxième électrode de mesure (4, 5) définissant un premier axe d'électrode (A), lequel axe présente un point d'intersection avec l'axe de tube de mesure (3) et le premier axe d'électrode (A) passant dans un premier plan en coupe transversale (Q1), lequel plan est perpendiculaire à l'axe de tube de mesure (3) ;
le débitmètre (1) présentant une première, une deuxième, une troisième et une quatrième électrode (8a - 11a) ;
la première et la deuxième électrode (8a, 10a) étant disposées de façon diamétralement opposée sur le tube de mesure (2) et formant un deuxième axe d'électrode (C) ;
la troisième et la quatrième électrode (9a, 11a) étant disposées de façon diamétralement opposée sur le tube de mesure (2) et formant un troisième axe d'électrode (F) ;
le deuxième et le troisième axe d'électrode (C, F) présentant un point d'intersection avec l'axe de tube de mesure (3) ;
le deuxième et le troisième axe d'électrode (C, F) se trouvant sur un deuxième plan en coupe transversale (Q2) ;
le deuxième et le troisième axe d'électrode (C ou F) coupant tous deux l'axe de tube de mesure (3) ;
le deuxième plan en coupe transversale (Q2) étant perpendiculaire à l'axe de tube de mesure (3),
le deuxième axe d'électrode (C) étant disposé de manière décalée d'une dimension angulaire dans le sens des aiguilles d'une montre inférieure ou égale à $\pi/2$ rad par rapport à une projection parallèle du premier axe d'électrode (A) sur le deuxième plan en section transversale (Q2),
le troisième axe d'électrode (F) étant disposé de manière décalée d'une dimension angulaire dans le sens inverse des aiguilles d'une montre inférieure ou égale à $\pi/2$ rad par rapport à une projection parallèle du premier axe d'électrode (A) sur le deuxième plan en section transversale (Q2),
lequel procédé comprend les étapes suivantes :

A Prélèvement de potentiels sur les quatre électrodes (8a-11a),
$E2$ représentant un potentiel sur la deuxième électrode, $E3$ représentant un potentiel sur la quatrième électrode, $E4$ représentant un potentiel sur la première électrode et $E5$ représentant un potentiel sur la troisième électrode ;
B Détermination de plusieurs différences de potentiel entre respectivement les potentiels de deux électrodes adjacentes, par rapport à la circonférence du tube de mesure ;
C Pondération de ces différences de potentiel issues de l'étape B et d'une différence de potentiel entre les potentiels $E0$ et $E1$ aux électrodes de mesure (4, 5) avec un facteur de pondération empirique, en tenant compte de $CALF_{nominal}$, $CALF_{tb}$ et $U_{nom}$,

$U_{nom}$ étant défini par une sensibilité nominale du débitmètre ou du capteur, spécifiée par le fabricant dans des conditions de référence,

$CALF_{nominal}$ étant défini par la sensibilité nominale du débitmètre divisée par la sensibilité effectivement déterminée par la différence de potentiel mesurée ($E0 - E1$) à la première et à la deuxième électrode de mesure (4, 5) dans les conditions de référence spécifiées pour la sensibilité nominale,

$CALF_{tb}$ étant défini par la sensibilité nominale du débitmètre magnéto-inductif divisée par une sensibilité effectivement déterminée par la différence de potentiel mesurée ($E3 - E4$) ou ($E5 - E2$) dans les conditions de référence spécifiées pour la sensibilité nominale ;

D Détermination d'un ou de plusieurs facteurs d'étalonnage à partir des différences de potentiel pondérées ; et

E Compensation du débit non compensé et/ou de la vitesse d'écoulement non compensée à l'aide d'un ou de plusieurs facteurs d'étalonnage.

2. Débitmètre magnéto-inductif (1) avec un tube de mesure (2), lequel tube présente un axe de tube de mesure (3), et une première et une deuxième électrode (4, 5), lesquelles sont disposées de façon diamétralement opposée l'une à l'autre sur le tube de mesure (2) et sur lesquelles est effectué un prélèvement de signal en vue de la détermination d'un débit et/ou d'une vitesse d'écoulement ;

la première et la deuxième électrode de mesure (4, 5) définissant un premier axe d'électrode (A), lequel axe présente un point d'intersection avec l'axe de tube de mesure (3) et le premier axe d'électrode (A) passant dans un premier plan en coupe transversale (Q1), lequel plan est perpendiculaire à l'axe de tube de mesure (3) ;

le débitmètre (1) comportant une première, une deuxième, une troisième et une quatrième électrode (8a - 11a) ;

la première et la deuxième électrode (8a, 10a) étant disposées de façon diamétralement opposée sur le tube de mesure (2) et définissant un deuxième axe d'électrode (C, F) ;

la troisième et la quatrième électrode (9a, 11a) étant disposées de façon diamétralement opposée sur le tube de mesure (2) et définissant un troisième axe d'électrode (F) ;

le deuxième et le troisième axe d'électrode (C, F) se trouvant sur un deuxième plan en coupe transversale (Q2) ;

le deuxième et le troisième axe d'électrode (C ou F) coupant tous deux l'axe de tube de mesure (3) et le deuxième plan en coupe transversale (Q2) étant perpendiculaire à l'axe de tube de mesure (3),

le deuxième axe d'électrode (C) étant disposé de manière décalée d'une dimension angulaire dans le sens des aiguilles d'une montre inférieure ou égale à $\pi/2$ rad par rapport à une projection parallèle du premier axe d'électrode (A) sur le deuxième plan en section transversale (Q2) ;

le troisième axe d'électrode (F) étant disposé de manière décalée d'une dimension angulaire dans le sens inverse des aiguilles d'une montre inférieure ou égale à $\pi/2$ rad par rapport à une projection parallèle du premier axe d'électrode (A) sur le deuxième plan en section transversale (Q2) ; et

**caractérisé**

**en ce que** le débitmètre (1) présente un agencement de bobines, lequel agencement est alimenté en courant par le biais d'une unité d'exploitation, de telle sorte qu'un champ magnétique périodique en résultant modifie sa direction, l'unité d'exploitation étant conçue de telle sorte à exécuter un procédé selon la revendication 1.

3. Débitmètre magnéto-inductif selon la revendication 2, **caractérisé en ce que** le deuxième et le troisième axe d'électrode (C, F)) sont disposés de manière décalée d'une dimension angulaire comprise entre $\pi/8$ rad et $3\pi/8$ rad par rapport à une projection parallèle du premier axe d'électrode (A) sur le deuxième plan en section transversale.

4. Débitmètre magnéto-inductif selon la revendication 2 ou 3, **caractérisé en ce que** le deuxième et le troisième axe d'électrode (C, F)) sont disposés de la même valeur dans le sens ou le sens inverse des aiguilles d'une montre par rapport à une projection parallèle du premier axe d'électrode (A).

5. Débitmètre magnéto-inductif selon l'une des revendications précédentes, **caractérisé en ce que** le deuxième et le troisième plan en coupe transversale (Q2 et Q3) sont disposés à égale distance du premier plan en coupe transversale (Q1) dans le sens de l'écoulement (FL), devant et derrière celui-ci.

6. Débitmètre magnéto-inductif selon l'une des revendications précédentes, **caractérisé en ce que** le débitmètre magnéto-inductif comporte, en plus des quatre électrodes (8a - 11a), sur le deuxième plan en couple transversale (Q2) quatre autres électrodes (8b - 11b) parmi lesquelles deux électrodes (8b, 10b ou 9b, 11b) sont respectivement disposées de façon diamétralement opposée sur le tube de mesure (2) et forment un quatrième et un cinquième axe d'électrode,

le quatrième et le cinquième axe d'électrode se trouvant sur le troisième plan en coupe transversale (Q3),

le quatrième et le cinquième axe d'électrode coupant l'axe de tube de mesure (3) et le troisième plan en coupe transversale (Q3) étant perpendiculaire à l'axe de tube de mesure (3),

le quatrième axe d'électrode étant disposé de manière décalée d'une dimension angulaire dans le sens des aiguilles d'une montre inférieure ou égale à $\pi/2$ rad par rapport à une projection parallèle du premier axe d'électrode (A) sur le troisième plan en section transversale (Q3),

le cinquième axe d'électrode étant disposé de manière décalée d'une dimension angulaire dans le sens inverse des aiguilles d'une montre inférieure ou égale à $\pi/2$ rad par rapport à une projection parallèle du premier axe d'électrode (A) sur le troisième plan en section transversale (Q3).

7. Débitmètre magnéto-inductif selon l'une des revendications 2 à 6, **caractérisé en ce que** l'unité d'exploitation, en vue de compenser l'écart de mesure induit par le profil d'écoulement, effectue une pondération des différences de potentiel sur les quatre ou huit autres électrodes (8a,b - 11a,b) au moyen d'un facteur de pondération.

8. Débitmètre magnéto-inductif selon l'une des revendications 2 à 7, **caractérisé en ce que** l'unité d'exploitation détermine une fonction de débit compensée et **en ce que** l'unité d'exploitation élimine les extrêmes de cette fonction de débit.

X=0

10a,b          E MSÜ          6

E2 [6]                              E5 [9]

                                      9a,b

5                    F                    2

3              A

Y=0 E0                        E1

C                    4

G                    8a,b

E3 [7]                              E4 [8]

11a,b          Erdungselektrode          111

7                              Fig. 1

Z=0

Q2          Q1    6          Q3

E MSÜ

9a          E5          E9          9b

4

E1

10a          E4          E8          10b

Erdungselektrode

7

Fig. 2

FL

Fig. 3

Fig. 4a

Fig. 4b

Fig. 5a

Fig. 5b

Fig. 6

Fig. 7

Fig. 8

Fig. 9

Fig. 10

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2292613 A